# EUROPÄISCHE PATENTSCHRIFT

(11) **EP 4 116 834 B1**
(45) Veröffentlichungstag und Bekanntmachung des Hinweises auf die Patenterteilung: **27.03.2024**
(21) Anmeldenummer: 22176362.6
(22) Anmeldetag: 31.05.2022
(51) Int. Cl.: G06F 13/40, G06F 13/42

(54) **EMPFANGSMODUL UND VERFAHREN ZUM EMPFANGEN VON DIFFERENTIELLEN SIGNALEN IN EINEM SERIELLEN BUSSYSTEM**
RECEIVING MODULE AND METHOD FOR RECEIVING DIFFERENTIAL SIGNALS IN A SERIAL BUS SYSTEM
MODULE DE RÉCEPTION ET PROCÉDÉ DE RÉCEPTION DES SIGNAUX DIFFÉRENTIELS DANS UN SYSTÈME DE BUS SÉRIE

(30) Priorität: 08.07.2021 DE 102021207186
(43) Veröffentlichungstag der Anmeldung: 11.01.2023
(73) Patentinhaber: Robert Bosch GmbH, 70442 Stuttgart (DE)
(72) Erfinder: Walker, Steffen, 72770 Reutlingen (DE); Mutter, Arthur, 73765 Neuhausen (DE); Lang, Felix, 72766 Reutlingen (DE)

(56) Entgegenhaltungen:
- DE-A1-102019 214 721
- US-A1- 2016 196 230
- US-A1- 2020 364 171

## Beschreibung

Die vorliegende Erfindung betrifft ein Empfangsmodul und ein Verfahren zum Empfangen von differentiellen Signalen in einem seriellen Bussystem, die bei einer Sende-/Empfangseinrichtung (Transceiver) verwendbar sind.

### Stand der Technik

Serielle Bussysteme werden zur Nachrichten- oder Datenübertragung in technischen Anlagen verwendet. Beispielsweise kann ein serielles Bussystem eine Kommunikation zwischen Sensoren und Steuergeräten in einem Fahrzeug oder einer technischen Produktionsanlage, usw. ermöglichen. Für die Datenübertragung gibt es verschiedene Standards oder Datenübertragungsprotokolle. Bekannt sind insbesondere ein CAN Bussystem, ein LVDS Bussystem (LVDS = Low Voltage Differential Signaling), ein MSC Bussystem (MSC = Micro-Second-Channel), ein 10BASE-T1S-Ethernet.

Bei einem CAN-Bussystem werden Nachrichten mittels des CAN- und/oder CAN FD Protokolls übertragen, wie es im Standard ISO-11898-1:2015 als CAN Protokoll-Spezifikation mit CAN FD beschrieben ist. Bei CAN FD wird bei der Übertragung auf dem Bus zwischen einer langsamen Betriebsart in einer ersten Kommunikationsphase (Arbitrationsphase) und einer schnellen Betriebsart in einer zweiten Kommunikationsphase (Datenphase) hin und her geschaltet. Bei einem CAN FD-Bussystem ist eine Datenübertragungsrate von größer 1 MBit pro Sekunde (1 Mbps) in der zweiten Kommunikationsphase möglich. CAN FD wird von den meisten Herstellern im ersten Schritt mit 500kbit/s Arbitrationsbitrate und 2Mbit/s Datenbitrate im Fahrzeug eingesetzt.

US 2016/0196230 A1 beschreibt, in Bezug auf CAN und CAN FD, ein System und ein Verfahren für ein Netzwerk mit geringen Emissionen. Dabei messen empfangende Transceiver, die derzeit nicht der Sender einer Nachricht sind, während der Datenphase von CAN FD, also wenn nach Abschluss der Arbitration feststeht, wer in der Datenphase der Sender ist, die Spannung am Bus. Optional kann die Spannung nur für dominante Zustände gemessen werden. Weicht die gemessene Spannung am Bus während der Datenphase von der Bezugsvorspannung des empfangenden Transceivers ab, passt der empfangende Transceiver seine Bezugsvorspannung an. Damit sollen die Emissionen des empfangenden Transceivers reduziert werden. Zumindest ein Spannungsteiler mit einem Schalter zum Einstellen von zwei verschiedenen Empfangsschwellen ist nicht gezeigt.

Um noch größere Datenraten in der zweiten Kommunikationsphase zu ermöglichen, gibt es Nachfolgebussysteme für CAN FD, wie beispielsweise CAN-SIC und CAN XL. Bei CAN- SIC gemäß dem Standard CiA601-4 kann in der zweiten Kommunikationsphase eine Datenrate von etwa 5 bis 8 Mbit/s erreicht werden. Bei CAN XL ist eine Datenrate in der zweiten Kommunikationsphase von > 10 Mbit/s gefordert, wobei der Standard (CiA610-3) dafür derzeit bei der Organisation CAN in Automation (CiA) festgelegt wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

Bei allen oben genannten CAN basierten Bussystemen wird für ein Sendesignal TxD separat ein Bussignal CAN_H und idealerweise gleichzeitig ein Bussignal CAN_L auf einen Bus getrieben. Hierbei wird zumindest in der ersten Kommunikationsphase in den Bussignalen CAN_H, CAN_L ein Buszustand aktiv getrieben. Der andere Buszustand wird nicht getrieben und stellt sich aufgrund eines Abschlusswiderstands für Busleitungen bzw. Busadern des Busses ein.

Zum Senden und Empfangen der Bussignale werden in einem CAN-Bussystem für die einzelnen Kommunikationsteilnehmer üblicherweise Sende-/Empfangseinrichtungen eingesetzt, die auch als CAN-Transceiver oder CAN FD Transceiver usw. bezeichnet werden. Bei CAN XL müssen die Sende-/Empfangseinrichtungen in der Lage sein, die Bussignale CAN_H, CAN_L in der zweiten Kommunikationsphase mit einem anderen Physical Layer auf den Bus zu senden und mit einer anderen Empfangsschwelle zu empfangen als in der ersten Kommunikationsphase. Der Physical Layer entspricht der Bitübertragungsschicht oder Schicht 1 des bekannten OSI-Modells (Open Systems Interconnection Modell).

Damit können die Daten in der zweiten Kommunikationsphase mit einer deutlich höheren Datenrate auf den Bus gesendet werden als in der ersten Kommunikationsphase. Zudem können sich damit die Buspegel der Bussignale CAN_H, CAN_L für die erste Kommunikationsphase von den Buspegeln der zweiten Kommunikationsphase unterscheiden. Für eine geringe Fehlerrate ist es dabei wichtig, dass eine Teilnehmerstation, die in die Kommunikation am Bus neu hinzugeschaltet wird, erkennt, in welcher Kommunikationsphase derzeit am Bus kommuniziert wird.

Für alle Betriebsphasen der Kommunikation am Bus ist also sicherzustellen, dass eine empfangende Teilnehmerstation des Bussystems die Pegel der Bussignale CAN_H, CAN_L richtig erkennen und auswerten kann.

### Offenbarung der Erfindung

Daher ist es Aufgabe der vorliegenden Erfindung, ein Empfangsmodul und ein Verfahren zum Empfangen von differentiellen Signalen in einem seriellen Bussystem bereitzustellen, welche die zuvor genannten Probleme lösen. Insbesondere sollen das Empfangsmodul und das Verfahren zum Empfangen von differentiellen Signalen in einem seriellen Bussystem eine zuverlässige und unaufwändige Erkennung von Bussignalen ermöglichen, auch wenn der Physical Layer zwischen zwei Kommunikationsphasen bei der Kommunikation am Bus umgeschaltet wird.

Die Aufgabe wird durch ein Empfangsmodul zum Empfangen von differentiellen Signalen in einem seriellen Bussystem mit den Merkmalen von Anspruch 1 gelöst. Das Empfangsmodul hat einen ersten Spannungsteiler zur Einstellung einer ersten Empfangsschwelle, einen ersten Komparator, der an den ersten Spannungsteiler angeschlossen ist, zur Auswertung der von einem Bus des Bussystems empfangenen differentiellen Signale mit der ersten Empfangsschwelle, einen zweiten Spannungsteiler zur Einstellung einer zweiten Empfangsschwelle oder einer dritten Empfangsschwelle, einen zweiten Komparator, der an den zweiten Spannungsteiler angeschlossen ist, zur Auswertung der von dem Bus empfangenen differentiellen Signale, mit der von dem zweiten Spannungsteiler eingestellten zweiten oder dritten Empfangsschwelle, und einer Schalteinheit zum Umschalten zwischen der zweiten und dritten Empfangsschwelle in Abhängigkeit von einer Betriebsart des Empfangsmoduls, in welche das Empfangsmodul für eine erste oder zweite Kommunikationsphase einer Kommunikation auf dem Bus zu schalten ist, wobei der erste und zweite Spannungsteiler jeweils an den Bus angeschlossen sind, wie in Anspruch 1 beschrieben.

Das beschriebene Empfangsmodul ist derart ausgestaltet, dass eine zuverlässige und unaufwändige Erkennung von Bussignalen im Betrieb des Bussystems erfolgt. Dies gilt insbesondere auch für eine derartige Kommunikation, bei der der Physical Layer zwischen zwei Kommunikationsphasen für die Kommunikation am Bus umgeschaltet wird. Das Empfangsmodul kann die jeweiligen Buszustände der einzelnen Kommunikationsphasen und somit die einzelnen Kommunikationsphasen bei der Kommunikation am Bus sicher unterscheiden.

Dabei ermöglicht das beschriebene Empfangsmodul, dass die Vorgaben für die Kommunikation gemäß den Anforderungen von CAN XL erfüllt werden, die insbesondere in dem Standard CiA610-3 festgeschrieben sind.

Zudem ist das beschriebene Empfangsmodul derart ausgestaltet, dass die Signalpegel der Bussignale mit simultanem Auswerten von zwei Empfangsschwellen in ein digitales Empfangssignal umgewandelt werden können. Dabei können die beiden Empfangsschwellen, welche in den einzelnen Kommunikationsphasen verwendet werden, je Kommunikationsphase unterschiedlich sein.

Dadurch stellt das Empfangsmodul sicher, dass eine Teilnehmerstation, die hinzugeschaltet wird und sich in die Kommunikation am Bus versucht zu integrieren, die Kommunikation am Bus nicht stört. Die Teilnehmerstation kann nämlich mit dem Empfangsmodul sicher erkennen, ob der Bus frei von Datenverkehr ist. Da das Empfangsmodul zuverlässig die aktuellen Buszustände zuordnet, wird die neu hinzugekommene Teilnehmerstation erst selbst Daten auf den Bus senden, wenn der Bus frei ist. Somit führt ein Hinzuschalten einer Teilnehmerstation, die beispielsweise initial gestartet wird oder versucht, sich nach einem Fehler in der Buskommunikation wieder in die Kommunikation am Bus zu integrieren, nicht zu einer Störung der Kommunikation am Bus.

Infolge dessen ermöglicht das Empfangsmodul die Funktionalität, für Arbitration und Datenphase unterschiedliche Empfangsschwellen zu verwenden. Dadurch wird nicht nur die Kommunikation im Bussystem mit höheren Bitraten realisiert, sondern auch die übertragbare Bitrate nicht durch Fehler in der Kommunikation herabgesetzt.

Vorteilhafte weitere Ausgestaltungen des Empfangsmoduls sind in den abhängigen Ansprüchen beschrieben.

Der erste und zweite Spannungsteiler kann eine Schaltung aus Widerständen aufweisen, an welchen der erste und zweite Komparator angeschlossen sind, wobei der erste und zweite Komparator die differentiellen Signale simultan auswerten.

In einer Ausgestaltung weisen der erste und zweite Spannungsteiler dieselbe Anzahl von Widerständen auf.

In einer Ausgestaltung ist die Anzahl von Widerständen in einem ersten Widerstandspfad des ersten Spannungsteilers für ein erstes Signal der differentiellen Signale gleich der Anzahl von Widerständen in einem zweiten Widerstandspfad des zweiten Spannungsteilers für ein zweites Signal der differentiellen Signale, wobei die Anzahl von Widerständen in einem zweiten Widerstandspfad des ersten Spannungsteilers für das zweite Signal der differentiellen Signale gleich der Anzahl von Widerständen in einem ersten Widerstandspfad des zweiten Spannungsteilers für das erste Signal der differentiellen Signale ist.

In einer Ausgestaltung ist in dem ersten Spannungsteiler die Anzahl der Widerstände in dem ersten Widerstandspfad größer als die Anzahl von Widerständen in dem zweiten Widerstandspfad, und
wobei in dem zweiten Spannungsteiler die Anzahl der Widerstände in dem ersten Widerstandspfad größer als die Anzahl von Widerständen in dem zweiten Widerstandspfad ist.

Bei dem Empfangsmodul ist ein Schalter angeordnet zum Hinzuschalten oder Wegschalten eines Widerstands zur Masse.

Optional ist die Schalteinheit ein NMOS-Transistor.

Das Empfangsmodul kann zudem einen Treiber zum Treiben eines digitalen Empfangssignals an eine Kommunikationssteuereinrichtung einer Teilnehmerstation des Bussystems aufweisen und eine Logikschaltung aufweisen zum Weiterleiten eines Ausgangssignals des ersten Komparators und eines Ausgangssignals des zweiten Komparators an den Treiber, insbesondere wenn die Schalteinheit die zweite Empfangsschwelle eingestellt hat, oder zum Weiterleiten nur des Ausgangssignals des zweiten Komparators an den Treiber.

Möglicherweise haben die Widerstände des zweiten Spannungsteilers eine größere Halbleiterfläche als Widerstände des ersten Spannungsteilers. Das zuvor beschriebene Empfangsmodul kann Teil einer Sende-/Empfangseinrichtung für eine Teilnehmerstation für ein serielles Bussystem sein. Die Sende-/Empfangseinrichtung kann zudem ein Sendemodul zum Senden von Signalen auf einen Bus des Bussystems aufweisen.

Die zuvor beschriebene Sende-/Empfangseinrichtung kann Teil einer Teilnehmerstation für ein serielles Bussystem sein. Die Teilnehmerstation kann zudem eine Kommunikationssteuereinrichtung zur Steuerung der Kommunikation in dem Bussystem und zur Erzeugung eines digitalen Sendesignals für das Sendemodul aufweisen.

Optional ist die Teilnehmerstation für die Kommunikation in einem Bussystem ausgestaltet, in dem zumindest zeitweise ein exklusiver, kollisionsfreier Zugriff einer Teilnehmerstation auf den Bus des Bussystems gewährleistet ist.

Die zuvor genannte Aufgabe wird zudem durch ein Verfahren zum Empfangen von differentiellen Signalen in einem seriellen Bussystem mit den Merkmalen von Anspruch 13 gelöst. Das Verfahren weist die Schritte auf, Einstellen, mit einem ersten Spannungsteiler einer ersten Empfangsschwelle eines Empfangsmoduls, wobei der erste Spannungsteiler an einen Bus des Bussystems angeschlossen ist, Einstellen, mit einem zweiten Spannungsteiler, einer zweiten Empfangsschwelle oder einer dritten Empfangsschwelle des Empfangsmoduls, wobei der zweite Spannungsteiler an den Bus angeschlossen ist, und wobei eine Schalteinheit zum Umschalten zwischen der zweiten und dritten Empfangsschwelle in Abhängigkeit von einer Betriebsart des Empfangsmoduls verwendet wird, in welche das Empfangsmodul für eine erste oder zweite Kommunikationsphase einer Kommunikation auf dem Bus zu schalten ist, Empfangen, mit dem Empfangsmodul von differentiellen Signalen von dem Bus, Auswerten, mit einem ersten Komparator, der an den ersten Spannungsteiler angeschlossen ist, der von dem Bus empfangenen differentiellen Signale mit der ersten Empfangsschwelle, und Auswerten, mit einem zweiten Komparator, der an den zweiten Spannungsteiler angeschlossen ist, der von dem Bus empfangenen differentiellen Signale, mit der von dem zweiten Spannungsteiler eingestellten ersten oder zweiten Empfangsschwelle, wie in Anspruch 13 beschrieben.

Das Verfahren bietet dieselben Vorteile, wie sie zuvor in Bezug auf das Empfangsmodul genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein Beispiel für den idealen zeitlichen Verlauf von Bussignalen CAN_H, CAN_L in dem Bussystem von Fig. 1;
Fig. 4 den zeitlichen Verlauf einer Differenzspannung VDIFF, die sich auf dem Bus des Bussystems infolge der Bussignale von Fig. 4 ausbildet;
Fig. 5 ein vereinfachtes Blockschaltbild einer Sende-Empfangseinrichtung mit einem Empfangsmodul für eine Teilnehmerstation des Bussystems gemäß dem ersten Ausführungsbeispiel;
Fig. 6 ein Schaltbild eines Empfangsmoduls gemäß einem ersten Ausführungsbeispiel;
Fig. 7 ein vereinfachtes Blockschaltbild einer Sende-Empfangseinrichtung mit einem Empfangsmodul für eine Teilnehmerstation des Bussystems gemäß einem zweiten Ausführungsbeispiel;
Fig. 8 ein Beispiel für einen zeitlichen Verlauf eines digitalen Sendesignals, welches gemäß einem zweiten Ausführungsbeispiel in der Arbitrationsphase (SIC-Betriebsart) in Bussignale CAN_H, CAN_L für einen Bus des Bussystems von Fig. 1 umgesetzt werden soll;
Fig. 9 den zeitlichen Verlauf der Bussignale CAN_H, CAN_L beim Wechsel zwischen einem rezessiven Buszustand zu einem dominanten Buszustand und zurück zu dem rezessiven Buszustand, die in der Arbitrationsphase (SIC-Betriebsart) aufgrund des Sendesignals von Fig. 8 auf den Bus gesendet werden;
Fig. 10 ein Beispiel für einen zeitlichen Verlauf eines digitalen Sendesignals, welches gemäß dem zweiten Ausführungsbeispiel in der Datenphase in Bussignale CAN_H, CAN_L für den Bus des Bussystems von Fig. 1 umgesetzt werden soll; und
Fig. 11 den zeitlichen Verlauf der Bussignale CAN_H, CAN_L, die in der Datenphase aufgrund des Sendesignals von Fig. 10 auf den Bus gesendet werden.

In den Figuren sind gleiche oder funktionsgleiche Elemente, sofern nichts anderes angegeben ist, mit denselben Bezugszeichen versehen.

### Beschreibung der Ausführungsbeispiele

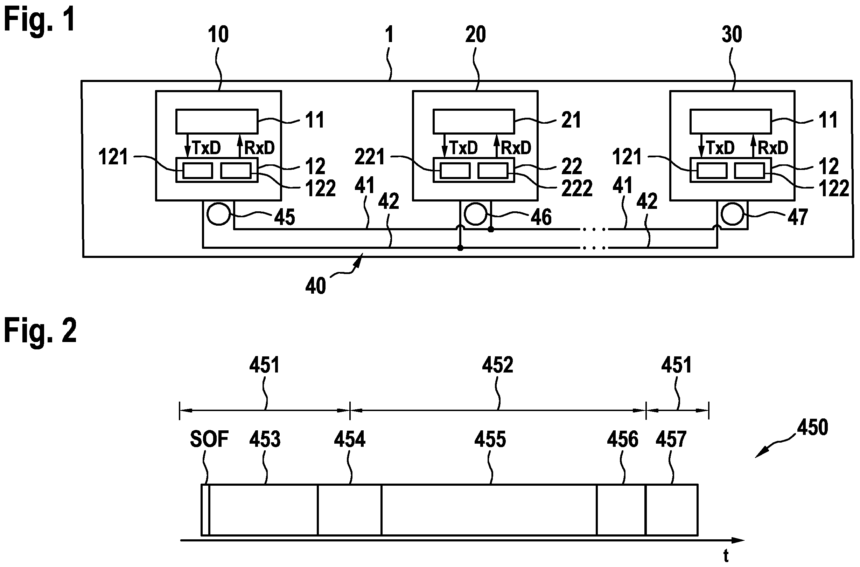

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 oder Busleitung mit einer ersten Busader 41 und einer zweiten Busader 42 angeschlossen sind. Die Busadern 41, 42 können auch CAN_H und CAN_L für die Signale auf dem Bus 40 genannt werden. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtung 12 hat ein Sendemodul 121 und ein Empfangsmodul 122.

Die Teilnehmerstation 20 hat eine Kommunikationssteuereinrichtung 21 und eine Sende-/Empfangseinrichtung 22. Die Sende-/Empfangseinrichtung 22 hat ein Sendemodul 221 und ein Empfangsmodul 222.

Die Sende-/Empfangseinrichtungen 12 der Teilnehmerstationen 10, 30 und die Sende-/Empfangseinrichtung 22 der Teilnehmerstation 20 sind jeweils direkt an den Bus 40 angeschlossen, auch wenn dies in Fig. 1 nicht dargestellt ist.

Die Kommunikationssteuereinrichtungen 11, 21 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11 erstellen und lesen erste Nachrichten 45, 47, die beispielsweise modifizierte CAN Nachrichten 45, 47 sind. Hierbei sind die modifizierten CAN Nachrichten 45, 47 beispielsweise auf der Grundlage des CAN XL-Formats aufgebaut. Die Sende-/Empfangseinrichtung 12 dient zum Senden und Empfangen der Nachrichten 45, 47 von dem Bus 40. Das Sendemodul 121 empfängt ein von der Kommunikationssteuereinrichtung 11 für eine der Nachrichten 45, 47 erstelltes digitales Sendesignal TxD und setzt dieses in Signale auf den Bus 40 um. Das Empfangsmodul 121 empfängt auf dem Bus 40 gesendete Signale entsprechend den Nachrichten 45 bis 47 und erzeugt daraus ein digitales Empfangssignal RxD. Das Empfangsmodul 122 sendet das Empfangssignal RxD an die Kommunikationssteuereinrichtung 11.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest zweite Nachrichten 46, beispielsweise CAN FD-Nachrichten 46. Die Sende-/Empfangseinrichtung 22 dient zum Senden und Empfangen der Nachrichten 46 von dem Bus 40. Das Sendemodul 221 empfängt ein von der Kommunikationssteuereinrichtung 21 erstelltes digitales Sendesignal TxD und setzt dieses in Signale für eine Nachricht 46 auf den Bus 40 um. Das Empfangsmodul 221 empfängt auf dem Bus 40 gesendete Signale entsprechend den Nachrichten 45 bis 47 und erzeugt daraus ein digitales Empfangssignal RxD. Ansonsten kann die Sende-/Empfangseinrichtung 22 wie ein herkömmlicher CAN-Transceiver ausgeführt sein.

Zum Senden der Nachrichten 45, 47 mit CAN SIC oder CAN XL werden bewährte Eigenschaften übernommen, die für die Robustheit und Anwenderfreundlichkeit von CAN und CAN FD verantwortlich sind, insbesondere Rahmenstruktur mit Identifier und Arbitrierung nach dem bekannten CSMA/CR-Verfahren. Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können.

Mit den beiden Teilnehmerstationen 10, 30 ist eine Bildung und dann Übertragung von Nachrichten 45 mit verschiedenen CAN-Formaten, insbesondere dem CAN FD Format oder dem CAN SIC Format oder dem CAN XL Format, sowie der Empfang solcher Nachrichten 45 realisierbar, wie nachfolgend genauer beschrieben.

Fig. 2 zeigt für die Nachricht 45 einen Rahmen 450, der insbesondere ein CAN XL Rahmen ist, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD. Alternativ ist der Rahmen 450 kompatibel zu CAN SIC.

Gemäß Fig. 2 ist der Rahmen 450 für die CAN-Kommunikation auf dem Bus 40 in unterschiedliche Kommunikationsphasen 451, 452 unterteilt, nämlich eine Arbitrationsphase 451 (erste Kommunikationsphase) und eine Datenphase 452 (zweite Kommunikationsphase). Der Rahmen 450 hat, nach einem Startbit SOF, ein Arbitrationsfeld 453, ein Steuerfeld 454, ein Datenfeld 455, ein Prüfsummenfeld 456 und ein Rahmenabschlussfeld 457.

In der Arbitrationsphase 451 wird mit Hilfe eines Identifizierers (ID) mit beispielsweise Bits ID28 bis ID18 in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens 450 bzw. der Nachricht 45 aus dem Datenfeld 455 sowie das Prüfsummenfeld 456 gesendet. In dem Prüfsummenfeld 456 kann eine Prüfsumme über die Daten der Datenphase 452 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Am Ende der Datenphase 452 wird wieder in die Arbitrationsphase 451 zurückgeschaltet.

In einem Endefeld in der Rahmenabschlussphase 457 kann mindestens ein Acknowledge-Bit enthalten sein. Außerdem kann eine Folge von 11 gleichen Bits vorhanden sein, welche das Ende des CAN XL-Rahmens 450 anzeigen. Mit dem mindestens einen Acknowledge-Bit kann mitgeteilt werden, ob ein Empfänger in dem empfangenen CAN XL-Rahmen 450 bzw. der Nachricht 45 einen Fehler entdeckt hat oder nicht.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Somit verwenden die Teilnehmerstationen 10, 30 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Jedoch ist im Vergleich zu CAN oder CAN FD in der Datenphase 452 als zweiter Kommunikationsphase eine Steigerung der Netto-Datenübertragungsrate, insbesondere auf über 10 Megabit pro Sekunde möglich. Außerdem ist ein Anheben der Größe der Nutzdaten pro Rahmen, insbesondere auf etwa 2kbyte oder einen beliebigen anderen Wert möglich.

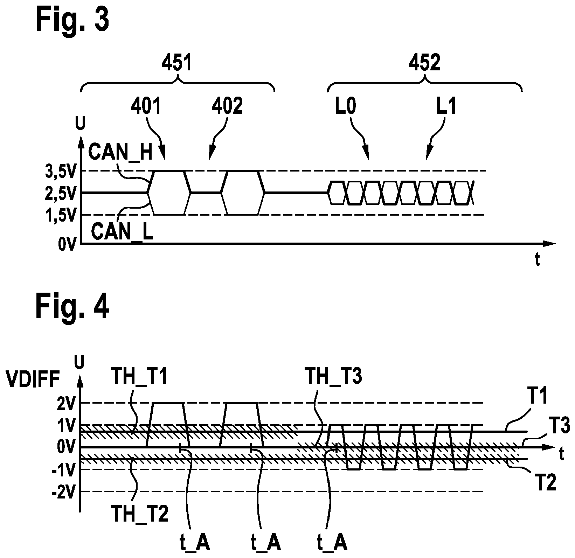

Fig. 3 zeigt auf der linken Seite, dass die Teilnehmerstationen 10, 20, 30 in der Arbitrationsphase 451 Signale CAN_H, CAN_L auf den Bus 40 senden, die abwechselnd mindestens einen dominanten Zuständ 401 oder mindestens einen rezessiven Zustand 402 haben. Nach der Arbitration in der Arbitrationsphase 451 steht eine der Teilnehmerstationen 10, 20, 30 als Gewinner fest. Angenommen, die Teilnehmerstation 10 hat die Arbitration gewonnen. Dann schaltet die Sende-/Empfangseinrichtung 12 der Teilnehmerstation 10 ihren Physical Layer am Ende der Arbitrationsphase 451 von einer ersten Betriebsart (SLOW) in eine zweite Betriebsart (FAST_TX) um, da die Teilnehmerstation 10 in der Datenphase 452 Sender der Nachricht 45 ist. Das Sendemodul 121 erzeugt dann in der Datenphase 452 bzw. in der zweiten Betriebsart (FAST_TX) abhängig von einem Sendesignal TxD nacheinander und somit seriell die Zustände L0 oder L1 für die Signale CAN_H, CAN_L auf dem Bus 40. Die Frequenz der Signale CAN_H, CAN_L kann in der Datenphase 452 gesteigert sein, wie auf der rechten Seite in Fig. 3 gezeigt. Somit ist die Netto-Datenübertragungsrate in der Datenphase 452 im Vergleich zu der Arbitrationsphase 451 gesteigert. Dagegen schaltet die Sende-/Empfangseinrichtung 12 der Teilnehmerstation 30 ihren Physical Layer am Ende der Arbitrationsphase 451 von der ersten Betriebsart (SLOW) in eine dritte Betriebsart (FAST_RX) um, da die Teilnehmerstation 30 in der Datenphase 452 nur Empfänger, also kein Sender, des Rahmens 450 ist. Nach dem Ende der Arbitrationsphase 451 schalten alle Sende-/Empfangseinrichtungen 12 der Teilnehmerstationen 10, 30 ihre Betriebsart in die erste Betriebsart (SLOW) um. Somit schalten alle Sende-/Empfangseinrichtungen 12 auch ihren Physical Layer um.

Gemäß Fig. 4 bildet sich in der Arbitrationsphase 451 im idealen Fall auf dem Bus 40 ein Differenzsignal VDIFF = CAN_H - CAN_L mit Werten von VDIFF = 2V für dominante Zustände 401 und VDIFF = 0V für rezessive Zustände 402. Dies ist auf der linken Seite in Fig. 4 gezeigt. Dagegen bildet sich in der Datenphase 452 auf dem Bus 40 ein Differenzsignal VDIFF = CAN_H - CAN_L mit Zuständen L0, L1 aus, wie auf der rechten Seite in Fig. 4 gezeigt. Der Zustand L0 hat einen Wert VDIFF = 1V. Der Zustand L1 hat einen Wert VDIFF = -1V.

Das Empfangsmodul 122 kann die Zustände 401, 402 jeweils mit zwei der Empfangsschwellen T1, T2, T3 unterscheiden, die in den Bereichen TH_T1, TH_T2, TH_T3 liegen. Hierfür tastet das Empfangsmodul 122 die Signale von Fig. 3 oder Fig. 4 zu Zeitpunkten t_A ab. Zum Auswerten des Abtastergebnisses verwendet das Empfangsmodul 122 in der Arbitrationsphase 451 die Empfangsschwelle T1 von beispielsweise 0,7 V und die Empfangsschwelle T2 von beispielsweise -0,35 V. Dagegen verwendet das Empfangsmodul 122 in der Datenphase 452 nur Signale, die mit der Empfangsschwelle T3 ausgewertet wurden. Bei der Umschaltung zwischen der ersten bis dritten Betriebsart (SLOW, FAST_TX, FAST_RX), die zuvor in Bezug auf Fig. 3 beschrieben sind, schaltet das Empfangsmodul 122 jeweils die Empfangsschwellen T2, T3 um, wie nachfolgend beschrieben.

Die Empfangsschwelle T2 dient zum Erkennen, ob der Bus 40 frei ist, wenn die Teilnehmerstation 12 neu in die Kommunikation am Bus 40 hinzugeschaltet wird und versucht, sich in die Kommunikation am Bus 40 zu integrieren. Die Empfangsschwelle T2 wird im Standard für CAN kurz OOB (= Out-of-Boundary = außerhalb des Grenzwerts) genannt. Die Bedingungen für einen verkehrsfreien CAN-XL-Bus sind, dass kein dominanter Zustand 401 auftritt, welcher typischerweise die Differenzspannung VDIFF = 2V hat. Somit darf die Empfangsschwelle T1 von beispielsweise 0,7 V nicht überschritten werden. Außerdem dürfen keine Pegel gemäß dem Zustand L1 auftreten, welcher typischerweise die Differenzspannung VDIFF = 2V hat -1V hat. Somit darf die Empfangsschwelle T2 von beispielsweise -0,35 V nicht unterschritten werden.

Jede Teilnehmerstation 10, 30 schaltet die Betriebsart der Sende-/Empfangseinrichtung 12 in die Betriebsart der Arbitrationsphase 451, wenn die Teilnehmerstation 12 neu in die Kommunikation am Bus 40 hinzugeschaltet wird.

Das Hinzuschalten der Teilnehmerstation 10 kann zum einen erforderlich werden, wenn die Teilnehmerstation 10 initial gestartet wird und in die Kommunikation am Bus 40 integriert werden soll. Zum anderen kann das Hinzuschalten der Teilnehmerstation 10 erforderlich werden, wenn die Teilnehmerstation 10 versucht, sich nach einem Fehler in der Buskommunikation wieder in die Kommunikation am Bus 40 zu integrieren. Erst wenn erkannt wird, dass der Bus frei ist, darf die Teilnehmerstation 10 in den genannten Fällen selbst Daten, insbesondere Nachrichten 45, 47, auf den Bus 40 senden.

Die folgende Tabelle 1 zeigt die Werte, die für die einzelnen Empfangsschwellen am Bus 40 einstellbar sind. Dabei gibt VDIFF_min für die einzelnen Bereiche TH_T1, TH_T2, TH_T3 die untere Grenze an, welche minimal für die entsprechende Empfangsschwelle T1, T2, T3 in V eingestellt werden darf. VDIFF_typ gibt den Wert an, der typischerweise oder üblicherweise für die entsprechenden Empfangsschwelle T1, T2, T3 in V eingestellt wird. VDIFF_max gibt für die einzelnen Bereiche TH_T1, TH_T2, TH_T3 die obere Grenze an, welche maximal für die entsprechende Empfangsschwelle T1, T2, T3 in V eingestellt werden darf.

**Tabelle 1: Toleranzbereiche der Empfangsschwellen T1, T2, T3**

| Empfangschwelle | VDIFF_min in V | VDIFF_typ in V | VDIFF_max in V | Toleranz in V |
|---|---|---|---|---|
| T1 | 0,5 | 0,7 | 0,9 | +/- 0,2 |
| T2 | -0,45 | -0,35 | -0,25 | +/- 0,1 |
| T3 | -0,1 | 0,0 | +0,1 | +/- 0,1 |

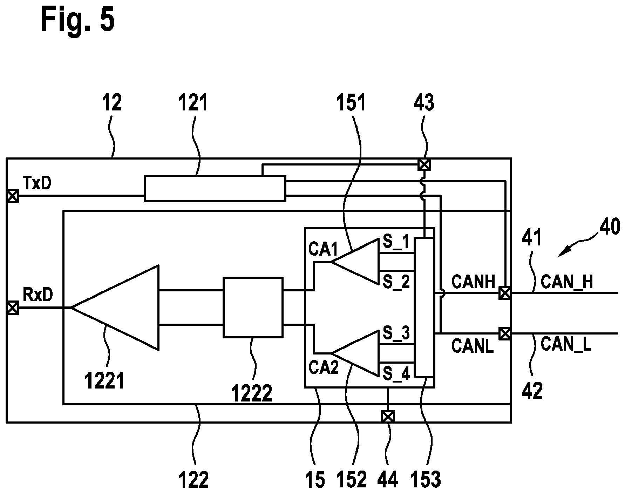

Fig. 5 zeigt den grundlegenden Aufbau der Sende-/Empfangseinrichtung 12 der Teilnehmerstation 10. Das Sendemodul 121 ist nur sehr vereinfacht dargestellt. Das Sendemodul 121 ist direkt an den Bus 40 angeschlossen, um das Sendesignal TxD der Kommunikationssteuereinrichtung 11 auf den Bus 40 senden zu können, um Signale gemäß Fig. 3 auf dem Bus 40 zu erzeugen.

Das Empfangsmodul 122 hat einen Treiber 1221 für das digitale Empfangssignal RxD, eine Logikschaltung 1222 und eine Empfangsschaltung 15. Die Empfangsschaltung 15 hat einen ersten Empfangskomparator 151, einen zweiten Empfangskomparator 152 und eine Empfangsstufe 153. Die Empfangskomparatoren 151, 152 sind jeweils Niederspannungs-Komparatoren.

Die Empfangsschaltung 15 ist zwischen den Bus 40 und die Logikschaltung 1222 geschaltet. Der Treiber 1221 ist an den Ausgang der Logikschaltung 1222 angeschlossen. Der Treiber 1221 treibt oder sendet das digitale Empfangssignal RxD zu der Kommunikationssteuereinrichtung 11.

Bei der Empfangsschaltung 15 ist die Empfangsstufe 153 an den Bus 40 angeschlossen. Im Betrieb des Bussystems 1 erzeugt die Empfangsstufe 153 aus den Signalen CAN_H, CAN_L Signale S_1, S_2 und gibt diese an den ersten Empfangskomparator 151 weiter. Der erste Empfangskomparator 151 erzeugt aus den Signalen S_1, S_2 ein Komparatorausgangssignal CA1.

Außerdem erzeugt die Empfangsstufe 153 im Betrieb des Bussystems 1 aus den Signalen CAN_H, CAN_L zusätzlich noch Signale S_3, S_4 und gibt diese an den zweiten Empfangskomparator 152 weiter. Der zweite Empfangskomparator 151 erzeugt aus den Signalen S_3, S_4 ein Komparatorausgangssignal CA2.

Die Logikschaltung 1222 ist ausgestaltet, je nach Betriebsart der Sende-/Empfangseinrichtung 12 das Signal CA1 und das Signal CA2 an den Treiber 1221 auszugeben oder nur das Signal CA2 an den Treiber 1221 auszugeben. Hierfür kann die Logikschaltung 1222 zumindest ein UND-Gatter aufweisen. Alternativ hat die Logikschaltung 1222 andere Logikbausteine, um die nachfolgend beschriebene Funktion des Empfangsmoduls 122 zu erfüllen.

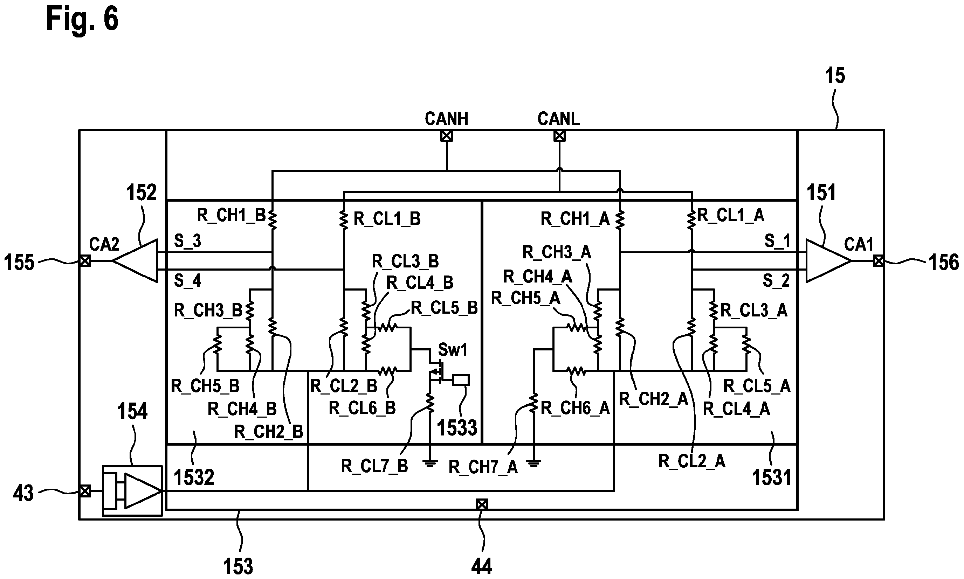

Die Empfangsstufe 153 und deren Verschaltung mit der Logikschaltung 1222 sind anhand von Fig. 6 noch genauer beschrieben.

Wie in Fig. 6 gezeigt, hat die Empfangsschaltung 15 zudem eine Busvorspannungsquelle (Bus-Biasing) 154, welche eine Spannung

CAN_SUPPLY/2 an die Empfangsstufe 153 liefert. Üblicherweise gilt CAN_SUPPLY = 5 V. In diesem Fall liefert die Busvorspannungsquelle 154 eine Spannung von 2,5 V an die Empfangsstufe 153.

Die Empfangsstufe 153 hat einen ersten Spannungsteiler 1531, einen zweiten Spannungsteiler 1532, eine Schalteinheit Sw1 und eine Betriebsarteinstelleinheit 1533. Der erste und zweite Spannungsteiler 1531 werden jeweils mit derselben Spannung von der Busvorspannungsquelle 154 versorgt, insbesondere 2,5V für den Rezessivzustand 402 (Fig. 3).

Der erste Spannungsteiler 1531 und der zweite Spannungsteiler 1532 sind jeweils resistive Spannungsteiler oder Widerstandsspannungsteiler.

Der erste Spannungsteiler 1531 hat einen ersten bis siebenten Widerstand R_CH1_A bis R_CH7_A für das Bussignal CAN_H. Der erste Widerstand R_CH1_A ist an seinem einen Ende an die Busleitung 41 (CANH) angeschlossen. An seinem anderen Ende ist der erste Widerstand R_CH1_A in Reihe geschaltet zu einer Parallelschaltung aus dem zweiten Widerstand R_CH2_A und einer Serienschaltung des dritten und vierten Widerstands R_CH3_A, R_CH4_A. An der Verbindung der Widerstände R_CH3_A, R_CH4_A ist ein Ende des fünften Widerstands R_CH5_A angeschlossen. Zudem ist der vierte Widerstand R_CH4_A an seinem anderen Ende mit einem Ende des sechsten Widerstands R_CH6_A verbunden. Die Widerstände R_CH5_A, R_CH6_A sind an ihren anderen Enden mit dem siebenten Widerstand R_CH7_A verbunden. An seinem anderen Ende ist der Widerstand R_CH7_A mit Masse und somit mit dem Anschluss 44 verbunden.

Zudem hat der Spannungsteiler 1531 einen achten bis zwölften Widerstand R_CL1_A bis R_CL5_A für das Bussignal CAN_L. Der achte Widerstand R_CL1_A ist an seinem einen Ende an die Busleitung 42 (CANL) angeschlossen. An seinem anderen Ende ist der Widerstand R_CL1_A in Reihe geschaltet zu einer Parallelschaltung aus dem neunten Widerstand R_CL2_A und einer Serienschaltung des zehnten und elften Widerstands R_CL3_A, R_CL4_A. An der Verbindung der Widerstände R_CL3_A, R_CL4_A ist ein Ende des zwölften Widerstands R_CL5_A angeschlossen. Zudem sind die Widerstände R_CL2_A, R_CL4_A, R_CL5_A jeweils an ihrer Verbindung mit der Verbindung der Widerstände R_CH2_A, R_CH4_A, R_CH6_A verbunden.

Ein erster Eingang des ersten Komparators 151 ist an die Verbindung zwischen dem ersten und zweiten Widerstand R_CH1_A, R_CH2_A angeschlossen. Ein zweiter Eingang des ersten Komparators 151 ist an die Verbindung zwischen dem achten und neunten Widerstand R_CL1_A, R_CL2_A angeschlossen.

Der resistive Pfad über den Widerstand R_CH7_A nach Masse stellt die Empfangsschwelle T1 von Fig. 4 ein.

Der zweite Spannungsteiler 1532 hat einen ersten bis siebenten Widerstand R_CL1_B bis R_CL7_B für das Bussignal CAN_H. Der erste Widerstand R_CL1_B ist an seinem einen Ende an die Busleitung 41 (CANL) angeschlossen. An seinem anderen Ende ist der erste Widerstand R_CL1_B in Reihe geschaltet zu einer Parallelschaltung aus dem zweiten Widerstand R_CL2_B und einer Serienschaltung des dritten und vierten Widerstands R_CL3_B, R_CL4_B. An der Verbindung der Widerstände R_CL3_B, R_CL4_B ist ein Ende des fünften Widerstands R_CL5_B angeschlossen. Zudem ist der vierte Widerstand R_CL4_B an seinem anderen Ende mit einem Ende des sechsten Widerstands R_CL6_B verbunden. Die Widerstände R_CL5_B, R_CL6_B sind an ihren anderen Enden mit der Schalteinheit Sw1 verbunden. Die Schalteinheit Sw1 ist zudem mit dem Widerstand R_CL7_B verbunden. An seinem anderen Ende ist der Widerstand R_CL7_B mit Masse und somit mit dem Anschluss 44 verbunden.

Zudem hat der zweite Spannungsteiler 1532 einen achten bis zwölften Widerstand R_CH1_B bis R_CH5_B für das Bussignal CAN_L. Der erste Widerstand R_CH1_B ist an seinem einen Ende an die Busleitung 42 (CANH) angeschlossen. An seinem anderen Ende ist der erste Widerstand R_CH1_B in Reihe geschaltet zu einer Parallelschaltung aus dem neunten Widerstand R_CH2_B und einer Serienschaltung des zehnten und elften Widerstands R_CH3_B, R_CH4_B. An der Verbindung der Widerstände R_CH3_B, R_CH4_B ist ein Ende des zwölften Widerstands R_CH5_B angeschlossen. Zudem sind die Widerstände R_CH2_B, R_CH4_B, R_CH5_B jeweils an ihrer Verbindung mit der Verbindung der Widerstände R_CH2_B, R_CH4_B, R_CH6_B verbunden.

Ein erster Eingang des zweiten Komparators 152 ist an die Verbindung zwischen dem ersten und zweiten Widerstand R_CH1_B, R_CH2_B angeschlossen. Ein zweiter Eingang des zweiten Komparators 152 ist an die Verbindung zwischen dem achten und neunten Widerstand R_CL1_B, R_CL2_B angeschlossen.

Ist der Schalter Sw1 entsprechend geschaltet, stellt der resistive Pfad über den Widerstand R_CL7_B nach Masse oder zum Anschluss 44 die Empfangsschwelle T2 von Fig. 4 ein. Ist der Schalter Sw1 derart geschaltet, dass der Pfad zum Widerstand R_CL7_B nicht leitfähig ist, ist die Empfangsschwelle T3 von Fig. 4 eingestellt.

Die Schaltung der Widerstände in den Widerstandsnetzwerken der Spannungsteiler 1531, 1532 ist symmetrisch aufgebaut.

Zur Einhaltung der Anforderung des Eingangswiderstands Rin an CANH und CANL weisen die Widerstandsteilerpfade der Spannungsteiler 1531, 1532 wegen der doppelten Struktur den halben Wert auf. Hierbei gilt Rin_CANH und Rin_CANL = 25kOhm...50kOhm. Typischerweise wird ein Eingangswiderstand Rin von 37,5kOhm für den Anschluss (Pin) für das Signal CAN_H und für den Anschluss (Pin) für das Signal CAN_L gewählt. In diesem Fall haben die beschriebenen Widerstandspfade der Spannungsteiler 1531, 1532 die folgende spezielle Ausgestaltung. Der Pfad von CANH über den Widerstand R_CH1_A des ersten Spannungsteilers 1531 gegen Masse oder den Anschluss 44 für CAN_GND weist einen Widerstandswert von etwa 2*37,5kOhm auf. Der Pfad von CANH über den Widerstand R_CH1_B des zweiten Spannungsteilers 1532 gegen Masse oder den Anschluss 44 für CAN_GND weist einen Widerstandswert von etwa 2*37,5kOhm auf. Der Pfad von CANL über den Widerstand R_CL1_A des ersten Spannungsteilers 1531 gegen Masse oder den Anschluss 44 für CAN_GND weist einen Widerstandswert von etwa auf. Der Pfad von CANL über den Widerstand R_CL1_B des zweiten Spannungsteilers 1532 gegen Masse oder den Anschluss 44 für CAN_GND weist einen Widerstandswert von etwa 2*37,5kOhm auf.

Da gemäß der vorangehenden Tabelle 1 bei den Schwellen T2, T3 die halbe Toleranz gefordert ist (+/-100mV) als bei der Schwelle T1 (+/-200mV), sind die Widerstände des ersten Spannungsteilers 1531 anders als die Widerstände des zweiten Spannungsteilers 1532 ausgestaltet. Die Widerstände des zweiten Spannungsteilers 1532 haben eine höhere Halbleiterfläche, insbesondere Silizium-Fläche (Si-Fläche) als die Widerstände des ersten Spannungsteilers 1531. Dadurch ergibt sich eine geringere Streuung der Empfangsschwelle, wie gemäß Tabelle 1 gefordert.

Bei dem Beispiel von Fig. 6 ist die Schalteinheit Sw1 ein Transistor, insbesondere ein NMOS-Transistor. Die Abkürzung "NMOS" bezeichnet einen n-Kanal-MOSFET, wobei die Abkürzung "MOSFET" für Metall-Oxid-Feldeffekttransistor steht. Steuert die Betriebsarteinstelleinheit 1533 die Schalteinheit Sw1 mit einem Signal mit dem Wert "high" an, ist die Schalteinheit Sw1 leitfähig bzw. geschlossen. In diesem Fall ist der Widerstandspfad nach Masse 43 über den Widerstand R_CL7_B eingestellt. Der resistive Pfad über den Widerstand R_CL7_B nach Masse stellt die Empfangsschwelle T2 von Fig. 4 ein, wie zuvor beschrieben.

Steuert die Betriebsarteinstelleinheit 1533 die Schalteinheit mit einem Signal mit dem Wert "low" an, ist die Schalteinheit Sw1 nicht leitfähig bzw. geöffnet. In diesem Fall ist der Widerstandspfad nach Masse 43 über den Widerstand R_CH7_A abgeschaltet und die Empfangsschwelle T3 von Fig. 4 eingestellt.

Im Zusammenhang mit den Komparatoren 151, 152 und den von diesen erzeugten digitalen Ausgangssignalen CA1, CA2 gilt für einen NMOS-Transistor als Schalteinheit Sw1 Folgendes.

**Tabelle 2: Zuordnung von Komparator-Ausgangssignalen und Empfangsschwellen**

| Signal | Detektierte Empfangsschwelle | |
|---|---|---|
| | Sw_thres = high (SLOW-Betriebsart) | SW_thres = low (FAST_TX-/ FAST-RX-Betriebsart) |
| CA1 | T1 | T1 |
| CA2 | T2 | T3 |

Das heißt, hat ein Signal sw_thres der Betriebsarteinstelleinheit 1533 den Wert "high", liefert der erste Komparator 151 ein Signal CA1, bei dem die Signale S_1, S_2 unter Verwendung der Empfangsschwelle T1 ausgewertet wurden, und der zweite Komparator 152 liefert ein Signal CA2, bei dem die Signale S_3, S_4 unter Verwendung der Empfangsschwelle T2 ausgewertet wurden. In anderen Worten, der erste Komparator 151 liefert die Erkennung von Schwelle T1 und der zweite Komparator 152 liefert die Erkennung von Schwelle T2.

Hat das Signal sw_thres der Betriebsarteinstelleinheit 1533 dagegen den Wert "low", liefert der erste Komparator 151 ein Signal CA1, bei dem die Signale S_1, S_2 unter Verwendung der Empfangsschwelle T1 ausgewertet wurden, und der zweite Komparator 152 liefert ein Signal CA2, bei dem die Signale S_3, S_4 unter Verwendung der Empfangsschwelle T3 ausgewertet wurden. In anderen Worten, der erste Komparator 151 liefert die Erkennung von Schwelle T1 und der zweite Komparator 152 liefert die Erkennung von Schwelle T3.

Somit bilden die Spannungsteiler 1531, 1532 eine doppelte Teilerstruktur. Die Spannungsteiler 1531, 1532 teilen die Busspannungen, die von den Signalen CAN_H, CAN_L erzeugt werden, auf Werte herunter, welche von den Komparatoren 151, 152 verarbeitet werden können.

Durch die doppelte Teilerstruktur der Empfangsstufe 15 können zwei verschiedene Empfangsschwellen der Empfangsschwellen T1, T2, T3 unabhängig voneinander und somit auch gleichzeitig oder simultan geprüft werden. Zusätzlich dazu kann mit Hilfe der Schalteinheit Sw1, angesteuert durch die Betriebsarteinstelleinheit 1533 zwischen zwei Empfangsschwellen der Empfangsschwellen T1, T2, T3 umgeschaltet werden. Dadurch können entweder die Empfangsschwellen T1, T2 gemäß Fig. 4 unabhängig voneinander und gleichzeitig geprüft werden oder die Empfangsschwellen T1, T3 gemäß Fig. 4 unabhängig voneinander und gleichzeitig geprüft werden. Es sind also zwei der drei Empfangsschwellen T1, T2, T3 je nach Bedarf zu der dritten Empfangsschwelle schaltbar.

Die Betriebsarteinstelleinheit 1533 stellt somit die Empfangsschwellen T1, T2, T3 gemäß der derzeit geforderten Betriebsart (SLOW, FAST_TX, FAST_RX) der Sende-/Empfangseinrichtung 12 ein.

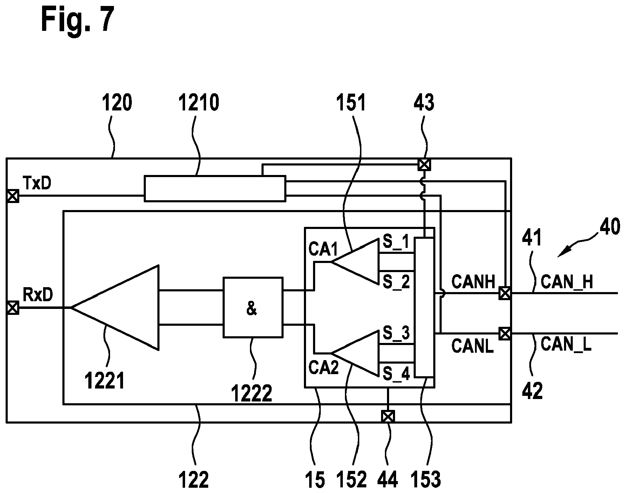

Fig. 7 zeigt eine Sende-/Empfangseinrichtung 120 gemäß einem zweiten Ausführungsbeispiel. Die Sende-/Empfangseirichtung 120 kann anstelle einer Sende-/Empfangseirichtung 12 in dem Bussystem 1 von Fig. 1 verwendet werden.

Die Sende-/Empfangseinrichtung 120 hat ein Sendemodul 1210 und ein Empfangsmodul 122. Das Sendemodul 1210 ist in vielen Teilen auf dieselbe Weise aufgebaut wie das Sendemodul 121 gemäß dem ersten Ausführungsbeispiel. Daher sind nachfolgend nur die Unterschiede zu dem ersten Ausführungsbeispiel beschrieben

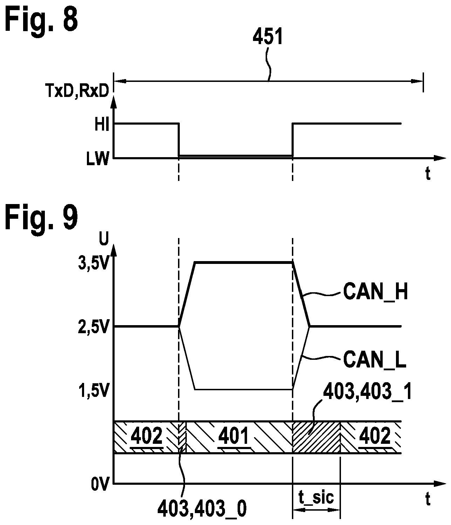

Im Unterschied zu dem ersten Ausführungsbeispiel erzeugt das Sendemodul 1210 die Signale CAN_H, CAN_L für die zwei Kommunikationsphasen auf dem Bus 40, wie anhand von Fig. 8 bis Fig. 11 nachfolgend beschrieben.

Fig. 8 zeigt ein Beispiel für einen Teil des digitalen Sendesignals TxD, welches das Sendemodul 121 in der Arbitrationsphase 451 von der Kommunikationssteuereinrichtung 11 empfängt, und daraus die Signale CAN_H, CAN_L für den Bus 40 erzeugt. In Fig. 8 wechselt das Sendesignal TxD von einem Zustand LW (Niedrig = Low) zu einem Zustand HI (Hoch = High) und wieder zurück zu dem Zustand LW (Niedrig = Low).

Das Empfangssignal RxD ist im Idealfall identisch zu dem Sendesignal TxD. In einem solchen Idealfall gibt es keine Sendeverzögerung /Laufzeit, insbesondere über den Bus 40, und keinen etwaigen Empfangsfehler.

Wie in Fig. 9 genauer gezeigt, kann das Sendemodul 121 für das Sendesignal TxD von Fig. 8 in der Betriebsart CAN SIC oder CAN XL die Signale CAN_H, CAN_L von Fig. 9 für die Busadern 41, 42 erzeugen. Im Unterschied zu Fig. 3, in bei den Signalen von Fig. 9 zusätzlich ein Zustand 403 (sic) vorhanden. Der Zustand 403 (sic) kann unterschiedlich lang sein, wie mit dem Zustand 403_0 (sic) beim Übergang von dem Zustand 402 (rec) zu dem Zustand 401 (dom) gezeigt und dem Zustand 403_1 (sic) beim Übergang von dem Zustand 401 (dom) zu dem Zustand 402 (rec) gezeigt. Der Zustand 403_0 (sic) ist zeitlich kürzer als der Zustand 403_1 (sic). Um Signale gemäß Fig. 9 zu erzeugen, wird das Sendemodul 1210 in eine SIC-Betriebsart (SIC-Mode) geschaltet.

Das Durchlaufen des kurzen sic-Zustands 403_0 ist gemäß dem Standard CiA610-3 für CAN XL nicht gefordert und der Zustand ist abhängig von der Art der Implementierung. Die zeitliche Dauer des "langen" Zustands 403_1 (sic) ist für CAN-SIC als auch für die SIC-Betriebsart bei CAN-XL spezifiziert als t_sic < 530ns, beginnend mit der steigenden Flanke an dem Sendesignal TxD von Fig. 8.

Das Sendemodul 121 soll im "langen" Zustand 403_1 (sic) die Impedanz zwischen den Busadern 41 (CANH) und 42 (CANL) möglichst gut an den charakteristischen Wellenwiderstand Zw der verwendeten Busleitung anpassen. Hierbei gilt Zw=100Ohm oder 120Ohm. Diese Anpassung verhindert Reflexionen und lässt somit den Betrieb bei höheren Bitraten zu. Zur Vereinfachung wird nachfolgend immer von dem Zustand 403 (sic) oder sic-Zustand 403 gesprochen.

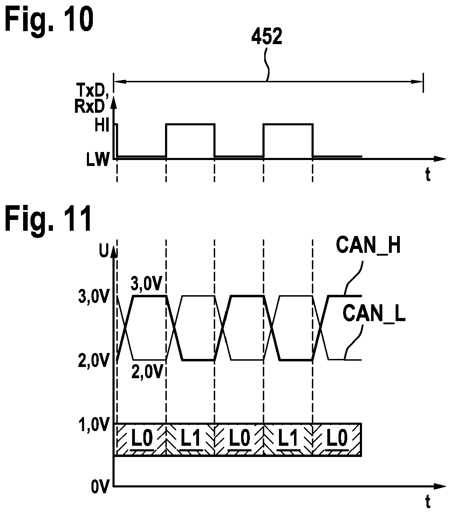

Fig. 10 zeigt ein Beispiel für einen anderen Teil des digitalen Sendesignals TxD, welches das Sendemodul 1210 in der Datenphase 452 von der Kommunikationssteuereinrichtung 11 (Fig. 1) empfängt, und daraus die Signale CAN_H, CAN_L für den Bus 40 erzeugt. In Fig. 10 wechselt das Sendesignal TxD mehrmals von Zustand HI (Hoch = High) zu einem Zustand LW (Niedrig = Low) und wieder zu einem Zustand HI (Hoch = High) und so weiter.

Wie in Fig. 11 genauer gezeigt, erzeugt das Sendemodul 1210 für das Sendesignal TxD von Fig. 10 die Signale CAN_H, CAN_L für die Busadern 41, 42 derart, dass sich der Zustand L0 für einen Zustand LW (Niedrig = Low) ausbildet. Zudem bildet sich der Zustand L1 für einen Zustand HI (Hoch = High) aus.

Es ist möglich, dass für die zwei Buszustände L0, L1 zumindest zeitweise kein dominanter und rezessiver Buszustand verwendet wird, sondern stattdessen ein erster Buszustand und ein zweiter Buszustand verwendet werden, die beide getrieben werden. Ein Beispiel für ein solches Bussystem ist ein CAN XL-Bussystem.

Das Empfangsmodul 122 kann auch die Signale gemäß Fig. 9 und Fig. 11 in den beiden verschiedenen Kommunikationsphasen, nämlich der SIC-Betriebsart oder Arbitrationsphase 451 und der Datenphase 452 empfangen. Hierfür schaltet das Empfangsmodul 122 die Empfangsschwellen T2, T3 für die jeweiligen Betriebsarten um, wie zuvor in Bezug auf das vorangehende Ausführungsbeispiel beschrieben.

Die Betriebsarteinstelleinheit 1533 stellt somit die Empfangsschwellen T1, T2, T3 gemäß der derzeit geforderten Betriebsart (SIC, FAST_TX, FAST_RX) der Sende-/Empfangseinrichtung 120 ein.

Gemäß einem dritten Ausführungsbeispiel stellt der erste Spannungsteiler 1531 die zweite Empfangsschwelle T2 von Fig. 4 ein. Der zweite Spannungsteiler 1532 stellt entweder die erste oder die dritte Empfangsschwelle T1, T3 von Fig. 4 ein. Die Widerstände der Spannungsteiler 1531, 1532 sind derart eingestellt, dass die Toleranz von +/-100mV gemäß der vorangehenden Tabelle 1 für alle Schwellen T1, T2, T3 eingehalten ist, wie zuvor für die Schwellen T2, T3 in Bezug auf das erste Ausführungsbeispiel beschrieben.

In diesem Fall ist die Logikschaltung 1222 derart ausgestaltet, dass immer beide Komparatorsignale CA1, CA2 an den Treiber 1221 weitergeleitet werden. Das Empfangsmodul 122 wertet die Signale CAN_H, CAN_L immer mit zwei Empfangsschwellen gleichzeitig oder simultan aus, nämlich entweder mit den Empfangsschwellen T1, T2 oder mit den Empfangsschwellen T2, T3. Zudem werden die zwei Empfangsschwellen unabhängig voneinander ausgewertet.

Diese Schaltung kann vorteilhaft sein, wenn auch in der Datenphase 452 die Empfangsschwelle T2 verwendet werden soll, wie in Fig. 4 gezeigt.

Alle zuvor beschriebenen Ausgestaltungen des Sendemoduls 121, 1210, des Empfangsmoduls 122, der Sende-/Empfangseinrichtungen 12, 22, 120, der Teilnehmerstationen 10, 20, 30, des Bussystems 1 und des darin ausgeführten Verfahrens gemäß dem ersten und zweiten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch alternativ eine andere Art von Kommunikationsnetz sein, bei dem die Signale als differentielle Signale übertragen werden. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 gewährleistet ist.

Das Bussystem 1 gemäß dem ersten und/oder zweiten Ausführungsbeispiel und deren Modifikationen ist insbesondere ein CAN-Bussystem oder ein CAN-HS-Bussystem oder ein CAN FD-Bussystem oder ein CAN SIC-Bussystem oder ein CAN XL-Bussystem. Das Bussystem 1 kann jedoch ein anderes Kommunikationsnetzwerk sein, bei dem die Signale als differentielle Signale und seriell über den Bus 40 übertragen werden.

Somit ist die Funktionalität der zuvor beschriebenen Ausführungsbeispiele beispielsweise bei Sende-/Empfangseinrichtungen 12, 22, 120 einsetzbar, die in einem CAN-Bussystem oder einem CAN-HS-Bussystem oder einem CAN FD-Bussystem oder einem CAN SIC-Bussystem oder einem CAN XL-Bussystem betreibbar sind.

Die Anzahl und Anordnung der Teilnehmerstationen 10, 20, 30 in dem Bussystem 1 gemäß dem ersten und zweiten Ausführungsbeispiel und deren Modifikationen ist beliebig. Insbesondere sind nur Teilnehmerstationen 10 oder nur Teilnehmerstationen 30 in den Bussystemen 1 des ersten oder zweiten Ausführungsbeispiels vorhanden.

## Patentansprüche

1. Empfangsmodul (122) zum Empfangen von differentiellen Signalen in einem seriellen Bussystem (1), mit
einem ersten Spannungsteiler (1531) zur Einstellung einer ersten Empfangsschwelle (T1),
einem ersten Komparator (151), der an den ersten Spannungsteiler (1531) angeschlossen ist, zur Auswertung der von einem Bus (40) des Bussystems (1) empfangenen differentiellen Signale (CAN_H, CAN_L) mit der ersten Empfangsschwelle (T1),
einem zweiten Spannungsteiler (1532) mit einem ersten Widerstandspfad und einem zweiten Widerstandspfad, wobei in dem zweiten Widerstandspfad ein Schalter (Sw1) mit einem Widerstand (R_CL7_B) verbunden ist, der an seinem anderen Ende mit Masse verbunden ist, und wobei der Schalter (Sw1) angeordnet ist zum leitfähig Schalten des zweiten Widerstandspfads zu dem Widerstand (R_CL7_B) zur Einstellung einer zweiten Empfangsschwelle (T2) und zum nicht leitfähig Schalten des zweiten Widerstandspfads zu dem Widerstand (R_CL7_B) zur Einstellung einer dritten Empfangsschwelle (T3),
einem zweiten Komparator (152), der an den zweiten Spannungsteiler (1532) angeschlossen ist, zur Auswertung der von dem Bus (40) empfangenen differentiellen Signale (CAN_H, CAN_L), mit der mit dem Schalter (Sw1) in dem zweiten Spannungsteiler (1532) eingestellten zweiten oder dritten Empfangsschwelle (T2, T3), und
einer Betriebsarteinstelleinheit (1533) zum Ansteuern des Schalters (Sw1) zum Umschalten zwischen der zweiten und dritten Empfangsschwelle (T2, T3) in Abhängigkeit von einer Betriebsart des Empfangsmoduls (122), in welche das Empfangsmodul (122) für eine erste oder zweite Kommunikationsphase (451, 452) einer Kommunikation auf dem Bus (40) zu schalten ist, bei welcher der Physical Layer zwischen den zwei Kommunikationsphasen (451, 452) für die Kommunikation am Bus (40) umgeschaltet wird,
wobei der erste und zweite Spannungsteiler (1531, 1532) jeweils an den Bus (40) angeschlossen sind.

2. Empfangsmodul (122) nach Anspruch 1,
wobei der erste und zweite Spannungsteiler (1531, 1532) eine Schaltung aus Widerständen aufweisen, an welchen der erste und zweite Komparator (151, 152) angeschlossen sind, und
wobei der erste und zweite Komparator (151, 152) die differentiellen Signale (CAN_H, CAN_L) simultan auswerten.

3. Empfangsmodul (122) nach Anspruch 1 oder 2, wobei der erste und zweite Spannungsteiler (1531, 1532) dieselbe Anzahl von Widerständen aufweisen.

4. Empfangsmodul (122) nach einem der vorangehenden Ansprüche,
wobei die Anzahl von Widerständen (R_CH1_A bis R_CH7_A) in einem ersten Widerstandspfad des ersten Spannungsteilers (1531) für ein erstes Signal (CAN_H) der differentiellen Signale (CAN_H, CAN_L) gleich der Anzahl von Widerständen (R_CL1_B bis R_CL7_B) in dem zweiten Widerstandspfad des zweiten Spannungsteilers (1532) für ein zweites Signal (CAN_L) der differentiellen Signale (CAN_H, CAN_L) ist, und
wobei die Anzahl von Widerständen (R_CL1_A bis R_CL5_A) in einem zweiten Widerstandspfad des ersten Spannungsteilers (1531) für das zweite Signal (CAN_L) der differentiellen Signale (CAN_H, CAN_L) gleich der Anzahl von Widerständen (R_CH1_B bis R_CH5_B) in dem ersten Widerstandspfad des zweiten Spannungsteilers (1532) für das erste Signal (CAN_H) der differentiellen Signale (CAN_H, CAN_L) ist.

5. Empfangsmodul (122) nach Anspruch 4,
wobei in dem ersten Spannungsteiler (1531) die Anzahl der Widerstände (R_CH1_A bis R_CH7_A) in dem ersten Widerstandspfad größer als die Anzahl von Widerständen (R_CL1_A bis R_CL5_A) in dem zweiten Widerstandspfad ist, und
wobei in dem zweiten Spannungsteiler (1532) die Anzahl der Widerstände (R_CH1_B bis R_CH5_B) in dem ersten Widerstandspfad größer als die Anzahl von Widerständen (R_CL1_B bis R_CL7_B) in dem zweiten Widerstandspfad ist.

6. Empfangsmodul (122) nach einem der vorangehenden Ansprüche, wobei der Schalter (Sw1) ein NMOS-Transistor ist.

7. Empfangsmodul (122) nach einem der vorangehenden Ansprüche, zudem mit
einem Treiber (1221) zum Treiben eines digitalen Empfangssignals (RxD) an eine Kommunikationssteuereinrichtung (11) einer Teilnehmerstation (10; 30) des Bussystems (1), und
einer Logikschaltung (1222) zum Weiterleiten eines Ausgangssignals (CA1) des ersten Komparators (151) und eines Ausgangssignals (CA2) des zweiten Komparators (152) an den Treiber (1221) oder zum Weiterleiten nur des Ausgangssignals (CA2) des zweiten Komparators (152) an den Treiber (1221).

8. Empfangsmodul (122) nach Anspruch 7, wobei die Logikschaltung (1222) zum Weiterleiten des Ausgangssignals (CA1) des ersten Komparators (151) und des Ausgangssignals (CA2) des zweiten Komparators (152) an den Treiber (1221) ausgestaltet ist, wenn die Betriebsarteinstelleinheit (1533) die zweite Empfangsschwelle (T2) eingestellt hat.

9. Empfangsmodul (122) nach einem der vorangehenden Ansprüche, wobei Widerstände (R_CH1_B bis R_CH5_B; R_CL1_B bis R_CL7_B) des zweiten Spannungsteilers (1532) eine größere Halbleiterfläche aufweisen als Widerstände (R_CH1_A bis R_CH7_A; R_CL1_A bis R_CL5_A) des ersten Spannungsteilers (1531).

10. Sende-/Empfangseinrichtung (12; 22; 120) für eine Teilnehmerstation (10, 20, 30) für ein serielles Bussystem (1), mit
einem Sendemodul (121; 1210) zum Senden von Signalen auf einen Bus (40) des Bussystems (1), und
einem Empfangsmodul (122) nach einem der vorangehenden Ansprüche.

11. Teilnehmerstation (10; 20; 30) für ein serielles Bussystem (1), mit
einer Sende-/Empfangseinrichtung (12; 22) nach Anspruch 10, und
einer Kommunikationssteuereinrichtung (11; 21) zum Steuern der Kommunikation in dem Bussystem (1) und zur Erzeugung eines digitalen Sendesignals (TxD) für das Sendemodul (121; 1210).

12. Teilnehmerstation (10; 20; 30) nach Anspruch 11, wobei die Teilnehmerstation (10; 20; 30) für die Kommunikation in einem Bussystem (1) ausgestaltet ist, in dem zumindest zeitweise ein exklusiver, kollisionsfreier Zugriff einer Teilnehmerstation (10, 20, 30) auf den Bus (40) des Bussystems (1) gewährleistet ist.

13. Verfahren zum Empfangen von differentiellen Signalen in einem seriellen Bussystem (1), wobei das Verfahren die Schritte aufweist
Einstellen, mit einem ersten Spannungsteiler (1531) einer ersten Empfangsschwelle (T1) eines Empfangsmoduls (122), wobei der erste Spannungsteiler (1531) an einen Bus (40) des Bussystems (1) angeschlossen ist,
Einstellen, mit einem zweiten Spannungsteiler (1532), einer zweiten Empfangsschwelle (T2) oder einer dritten Empfangsschwelle (T3) des Empfangsmoduls (122), wobei der zweite Spannungsteiler (1532) an den Bus (40) angeschlossen ist und einen ersten Widerstandspfad und einen zweiten Widerstandspfad aufweist, wobei in dem zweiten Widerstandspfad ein Schalter (Sw1) mit einem Widerstand (R_CL7_B) verbunden ist, der an seinem anderen Ende mit Masse verbunden ist, und wobei der Schalter (Sw1) angeordnet ist zum leitfähig Schalten des zweiten Widerstandspfads zu dem Widerstand (R_CL7_B) zur Einstellung der zweiten Empfangsschwelle (T2) und zum nicht leitfähig Schalten des zweiten Widerstandspfads zu dem Widerstand (R_CL7_B) zur Einstellung der dritten Empfangsschwelle (T3), und wobei eine Betriebsarteinstelleinheit (1533) zum Ansteuern des Schalters (Sw1) zum Umschalten zwischen der zweiten und dritten Empfangsschwelle (T2, T3) in Abhängigkeit von einer Betriebsart des Empfangsmoduls (122) verwendet wird, in welche das Empfangsmodul (122) für eine erste oder zweite Kommunikationsphase (451, 452) einer Kommunikation auf dem Bus (40) zu schalten ist, bei welcher der Physical Layer zwischen den zwei Kommunikationsphasen (451, 452) für die Kommunikation am Bus (40) umgeschaltet wird,
Empfangen, mit dem Empfangsmodul (122) von differentiellen Signalen (CAN_H, CAN_L) von dem Bus (40),
Auswerten, mit einem ersten Komparator (151), der an den ersten Spannungsteiler (1531) angeschlossen ist, der von dem Bus (40) empfangenen differentiellen Signale (CAN_H, CAN_L) mit der ersten Empfangsschwelle (T1), und
Auswerten, mit einem zweiten Komparator (152), der an den zweiten Spannungsteiler (1532) angeschlossen ist, der von dem Bus (40) empfangenen differentiellen Signale (CAN_H, CAN_L), mit der von dem zweiten Spannungsteiler (1532) eingestellten zweiten oder dritten Empfangsschwelle (T2, T3).

## Claims

1. Reception module (122) for receiving differential signals in a serial bus system (1), having
a first voltage divider (1531) for setting a first reception threshold (T1),
a first comparator (151) that is connected to the first voltage divider (1531) for evaluating the differential signals (CAN_H, CAN_L) received from a bus (40) of the bus system (1) using the first reception threshold (T1), a second voltage divider (1532) having a first resistance path and a second resistance path, wherein, in the second resistance path, a switch (Sw1) is connected to a resistor (R_CL7_B) that is connected to earth at its other end, and wherein the switch (Sw1) is arranged to switch on the second resistance path to the resistor (R_CL7_B) in order to set a second reception threshold (T2) and to switch off the second resistance path to the resistor (R_CL7_B) in order to set a third reception threshold (T3),
a second comparator (152) that is connected to the second voltage divider (1532) for evaluating the differential signals (CAN_H, CAN_L) received from the bus (40) using the second or the third reception threshold (T2, T3) set by the switch (Sw1) in the second voltage divider (1532), and
an operating mode setting unit (1533) for actuating the switch (Sw1) to change over between the second and the third reception threshold (T2, T3) depending on an operating mode of the reception module (122) to which the reception module (122) can be switched for a first or a second communication phase (451, 452) of a communication on the bus (40), upon which the physical layer is changed over between the two communication phases (451, 452) for the communication on the bus (40),
wherein the first and the second voltage divider (1531, 1532) are each connected to the bus (40).

2. Reception module (122) according to Claim 1,
wherein the first and the second voltage divider (1531, 1532) have a circuit comprising resistors, to which the first and the second comparator (151, 152) are connected, and
wherein the first and the second comparator (151, 152) simultaneously evaluate the differential signals (CAN_H, CAN_L).

3. Reception module (122) according to Claim 1 or 2, wherein the first and the second voltage divider (1531, 1532) have the same number of resistors.

4. Reception module (122) according to one of the preceding claims,
wherein the number of resistors (R_CH1_A to R_CH7_A) in a first resistance path of the first voltage divider (1531) for a first signal (CAN_H) of the differential signals (CAN_H, CAN_L) is equal to the number of resistors (R_CL1_B to R_CL7_B) in the second resistance path of the second voltage divider (1532) for a second signal (CAN_L) of the differential signals (CAN_H, CAN_L), and
wherein the number of resistors (R_CL1_A to R_CL5_A) in a second resistance path of the first voltage divider (1531) for the second signal (CAN_L) of the differential signals (CAN_H, CAN_L) is equal to the number of resistors (R_CH1_B to R_CH5_B) in the first resistance path of the second voltage divider (1532) for the first signal (CAN_H) of the differential signals (CAN_H, CAN_L).

5. Reception module (122) according to Claim 4,
wherein, in the first voltage divider (1531), the number of resistors (R_CH1_A to R_CH7_A) in the first resistance path is greater than the number of resistors (R_CL1_A to R_CL5_A) in the second resistance path, and
wherein, in the second voltage divider (1532), the number of resistors (R_CH1_B to R_CH5_B) in the first resistance path is greater than the number of resistors (R_CL1_B to R_CL7_B) in the second resistance path.

6. Reception module (122) according to one of the preceding claims, wherein the switch (Sw1) is an NMOS transistor.

7. Reception module (122) according to one of the preceding claims, additionally having
a driver (1221) for driving a digital reception signal (RxD) to a communication control apparatus (11) of a subscriber station (10;30) of the bus system (1), and
a logic circuit (1222) for forwarding an output signal (CA1) of the first comparator (151) and an output signal (CA2) of the second comparator (152) to the driver (1221) or for forwarding only the output signal (CA2) of the second comparator (152) to the driver (1221).

8. Reception module (122) according to Claim 7, wherein the logic circuit (1222) is configured to forward the output signal (CA1) of the first comparator (151) and the output signal (CA2) of the second comparator (152) to the driver (1221) if the operating mode setting unit (1533) has set the second reception threshold (T2).

9. Reception module (122) according to one of the preceding claims, wherein resistors (R_CH1_B to R_CH5_B; R_CL1_B to R_CL7_B) of the second voltage divider (1532) have a larger semiconductor area than resistors (R_CH1_A to R_CH7_A; R_CL1_A to R_CL5_A) of the first voltage divider (1531).

10. Transmission/reception apparatus (12; 22; 120) for a subscriber station (10, 20, 30) for a serial bus system (1), having
a transmission module (121; 1210) for transmitting signals onto a bus (40) of the bus system (1), and
a reception module (122) according to one of the preceding claims.

11. Subscriber station (10; 20; 30) for a serial bus system (1), having
a transmission/reception apparatus (12; 22) according to Claim 10, and
a communication control apparatus (11; 21) for controlling the communication in the bus system (1) and for generating a digital transmission signal (TxD) for the transmission module (121; 1210).

12. Subscriber station (10; 20; 30) according to Claim 11, wherein the subscriber station (10; 20; 30) is configured for communication in a bus system (1), in which exclusive, collision-free access of a subscriber station (10, 20, 30) to the bus (40) of the bus system (1) is at least temporarily guaranteed.

13. Method for receiving differential signals in a serial bus system (1), wherein the method has the steps of
using a first voltage divider (1531) to set a first reception threshold (T1) of a reception module (122), wherein the first voltage divider (1531) is connected to a bus (40) of the bus system (1),
using a second voltage divider (1532) to set a second reception threshold (T2) or a third reception threshold (T3) of the reception module (122), wherein the second voltage divider (1532) is connected to the bus (40) and has a first resistance path and a second resistance path, wherein, in the second resistance path, a switch (Sw1) is connected to a resistor (R_CL7_B) that is connected to earth at its other end, and wherein the switch (Sw1) is arranged to switch on the second resistance path to the resistor (R_CL7_B) in order to set the second reception threshold (T2) and to switch off the second resistance path to the resistor (R_CL7_B) in order to set the third reception threshold (T3), and wherein an operating mode setting unit (1533) is used to actuate the switch (Sw1) to change over between the second and the third reception threshold (T2, T3) depending on an operating mode of the reception module (122) to which the reception module (122) can be switched for a first or a second communication phase (451, 452) of a communication on the bus (40), upon which the physical layer is changed over between the two communication phases (451, 452) for the communication on the bus (40),
using the reception module (122) to receive differential signals (CAN_H, CAN_L) from the bus (40),
using a first comparator (151), which is connected to the first voltage divider (1531), to evaluate the differential signals (CAN_H, CAN_L) received from the bus (40) using the first reception threshold (T1), and using a second comparator (152), which is connected to the second voltage divider (1532), to evaluate the differential signals (CAN_H, CAN_L) received from the bus (40) using the second or the third reception threshold (T2, T3) set by the second voltage divider (1532).

## Revendications

1. Module de réception (122) permettant de recevoir des signaux différentiels dans un système de bus série (1), comprenant
un premier diviseur de tension (1531) pour régler un premier seuil de réception (T1),
un premier comparateur (151) qui est connecté au premier diviseur de tension (1531) pour évaluer les signaux différentiels (CAN_H, CAN_L) reçus d'un bus (40) du système de bus (1) avec le premier seuil de réception (T1),
un deuxième diviseur de tension (1532) pourvu d'une première piste résistive et d'une deuxième piste résistive, dans lequel, dans la deuxième piste résistive, un commutateur (Sw1) est relié à une résistance (R_CL7_B) qui est reliée à la masse à son autre extrémité, et dans lequel le commutateur (Sw1) est disposé pour rendre conductrice la deuxième piste résistive à la résistance (R_CL7_B) afin de régler un deuxième seuil de réception (T2) et pour rendre non conductrice la deuxième piste résistive à la résistance (R_CL7_B) afin de régler un troisième seuil de réception (T3),
un deuxième comparateur (152) qui est connecté au deuxième diviseur de tension (1532) pour évaluer les signaux différentiels (CAN_H, CAN_L) reçus du bus (40) avec le deuxième ou le troisième seuil de réception (T2, T3) réglé à l'aide du commutateur (Sw1) dans le deuxième diviseur de tension (1532), et
une unité de réglage de mode de fonctionnement (1533) pour piloter le commutateur (Sw1) afin de commuter entre le deuxième et le troisième seuil de réception (T2, T3) en fonction d'un mode de fonctionnement du module de réception (122) dans lequel le module de réception (122) doit être commuté pour une première ou une deuxième phase de communication (451, 452) d'une communication sur le bus (40) à laquelle la couche physique est commutée entre les deux phases de communication (451, 452) pour la communication sur le bus (40),
dans lequel le premier et le deuxième diviseur de tension (1531, 1532) sont respectivement connectés au bus (40).

2. Module de réception (122) selon la revendication 1, dans lequel le premier et le deuxième diviseur de tension (1531, 1532) présente un circuit de résistances auxquelles sont connectés le premier et le deuxième comparateur (151, 152), et
dans lequel le premier et le deuxième comparateur (151, 152) évaluent simultanément les signaux différentiels (CAN_H, CAN_L).

3. Module de réception (122) selon la revendication 1 ou 2, dans lequel le premier et le deuxième diviseur de tension (1531, 1532) présentent le même nombre de résistances.

4. Module de réception (122) selon l'une quelconque des revendications précédentes,
dans lequel le nombre de résistances (R_CH1_A à R_CH7_A) dans une première piste résistive du premier diviseur de tension (1531) pour un premier signal (CAN_H) des signaux différentiels (CAN_H, CAN_L) est égal au nombre de résistances (R_CL1_B à R_CL7_B) dans la deuxième piste résistive du deuxième diviseur de tension (1532) pour un deuxième signal (CAN_L) des signaux différentiels (CAN_H, CAN_L), et
dans lequel le nombre de résistances (R_CL1_A à R_CL5_A) dans une deuxième piste résistive du premier diviseur de tension (1531) pour le deuxième Signal (CAN_L) des signaux différentiels (CAN_H, CAN_L) est égal au nombre de résistances (R_CH1_B à R_CH5_B) dans la première piste résistive du deuxième diviseur de tension (1532) pour le premier signal (CAN_H) des signaux différentiels (CAN_H, CAN_L).

5. Module de réception (122) selon la revendication 4, dans lequel, dans le premier diviseur de tension (1531), le nombre des résistances (R_CH1_A à R_CH7_A) dans la première piste résistive est supérieur au nombre de résistances (R_CL1_A à R_CL5_A) dans la deuxième piste résistive, et
dans lequel, dans le deuxième diviseur de tension (1532), le nombre des résistances (R_CH1_B à R_CH5_B) dans la première piste résistive est supérieur au nombre de résistances (R_CL1_B à R_CL7_B) dans la deuxième piste résistive.

6. Module de réception (122) selon l'une quelconque des revendications précédentes, dans lequel le commutateur (Sw1) est un transistor NMOS.

7. Module de réception (122) selon l'une quelconque des revendications précédentes, comprenant en outre
un circuit d'attaque (1221) pour exciter un signal de réception numérique (RxD) pour un équipement de commande de communication (11) d'un poste d'abonné (10 ; 30) du système de bus (1), et
un circuit logique (1222) pour retransmettre un signal de sortie (CA1) du premier comparateur (151) et un signal de sortie (CA2) du deuxième comparateur (152) au circuit d'attaque (1221) ou pour ne retransmettre que le signal de sortie (CA2) du deuxième comparateur (152) au circuit d'attaque (1221).

8. Module de réception (122) selon la revendication 7, dans lequel le circuit logique (1222) est configuré pour retransmettre le signal de sortie (CA1) du premier comparateur (151) et le signal de sortie (CA2) du deuxième comparateur (152) au circuit d'attaque (1221) lorsque l'unité de réglage de mode de fonctionnement (1533) a réglé le deuxième seuil de réception (T2).

9. Module de réception (122) selon l'une quelconque des revendications précédentes, dans lequel les résistances (R_CH1_B à R_CH5_B ; R_CL1_B à R_CL7_B) du deuxième diviseur de tension (1532) présentent une plus grande surface semi-conductrice que les résistances (R_CH1_A à R_CH7_A ; R_CL1_A à R_CL5_A) du premier diviseur de tension (1531).

10. Equipement d'émission/réception (12 ; 22 ; 120) pour un poste d'abonné (10, 20, 30) pour un système de bus série (1), comprenant
un module d'émission (121 ; 1210) pour émettre des signaux sur un bus (40) du système de bus (1), et
un module de réception (122) selon l'une quelconque des revendications précédentes.

11. Poste d'abonné (10 ; 20 ; 30) pour un système de bus série (1), comprenant
un équipement d'émission/réception (12 ; 22) selon la revendication 10, et
un équipement de commande de communication (11 ; 21) pour commander la communication dans le système de bus (1) et pour générer un signal d'émission numérique (TxD) pour le module d'émission (121 ; 1210).

12. Poste d'abonné (10 ; 20 ; 30) selon la revendication 11, dans lequel le poste d'abonné (10 ; 20 ; 30) est configuré pour la communication dans un système de bus (1) dans lequel un accès exclusif, sans collision, d'un poste d'abonné (10, 20, 30) au bus (40) du système de bus (1) est assuré au moins temporairement.

13. Procédé permettant de recevoir des signaux différentiels dans un système de bus série (1), le procédé présentant les étapes consistant à
régler, par un premier diviseur de tension (1531), un premier seuil de réception (T1) d'un module de réception (122), le premier diviseur de tension (1531) étant connecté à un bus (40) du système de bus (1),
régler, par un deuxième diviseur de tension (1532), un deuxième seuil de réception (T2) ou un troisième seuil de réception (T3) du module de réception (122), le deuxième diviseur de tension (1532) étant connecté au bus (40) et présentant une première piste résistive et une deuxième piste résistive, dans lequel, dans la deuxième piste résistive, un commutateur (Sw1) est reliée à une résistance (R_CL7_B) qui est reliée à la masse à son autre extrémité, et dans lequel le commutateur (Sw1) est disposé pour rendre conductrice la deuxième piste résistive à la résistance (R_CL7_B) afin de régler le deuxième seuil de réception (T2) et pour rendre non conductrice la deuxième piste résistive à la résistance (R_CL7 B) afin de régler le troisième seuil de réception (T3), et dans lequel une unité de réglage de mode de fonctionnement (1533) est utilisée pour piloter le commutateur (Sw1) afin de commuter entre le deuxième et le troisième seuil de réception (T2, T3) en fonction d'un mode de fonctionnement du module de réception (122) dans lequel le module de réception (122) doit être commuté pour une première ou une deuxième phase de communication (451, 452) d'une communication sur le bus (40) à laquelle la couche physique est commutée entre les deux phases de communication (451, 452) pour la communication sur le bus (40),
recevoir, par le module de réception (122) des signaux différentiels (CAN_H, CAN_L) du bus (40),
évaluer, par un premier comparateur (151) qui est connecté au premier diviseur de tension (1531), les signaux différentiels (CAN_H, CAN_L) reçus du bus (40) avec le premier seuil de réception (T1),
évaluer, par un deuxième comparateur (152) qui est connecté au deuxième diviseur de tension (1532), les signaux différentiels (CAN_H, CAN_L) reçus du bus (40) avec le deuxième ou le troisième seuil de réception (T2, T3) réglé à l'aide du deuxième diviseur de tension (1532).
